# EUROPÄISCHE PATENTSCHRIFT

(11) **EP 2 947 204 B1**
(45) Veröffentlichungstag und Bekanntmachung des Hinweises auf die Patenterteilung: **11.01.2017**
(21) Anmeldenummer: 14401062.6
(22) Anmeldetag: 19.05.2014
(51) Int. Cl.: E01B 31/13, B23C 3/00, B23C 5/22

(54) **Verfahrbare Vorrichtung zum Fräsen von Schienenköpfen und Verfahren zum Wechsel von Schneidplatten bei einer derartigen Vorrichtung**
Moveable device for milling rail heads and method for changing the cutting inserts in such a device
Dispositif mobile de fraisage de champignons de rails et procédé de changement de plaques de coupe dans le cadre d'un tel dispositif

(43) Veröffentlichungstag der Anmeldung: 25.11.2015
(73) Patentinhaber: Mevert Maschinenbau GmbH & Co.KG, 31714 Lauenhagen (DE); Schweerbau GmbH & Co. KG, 31655 Stadthagen (DE)
(72) Erfinder: Mevert, Frank, 31714 Lauenhagen (DE)
(74) Vertreter: Scheffler, Jörg

(56) Entgegenhaltungen:
- EP-A1- 0 431 746
- WO-A2-2014/040095
- DE-A1- 3 222 208
- DE-A1-102006 008 093

## Beschreibung

Die Erfindung betrifft eine verfahrbare Vorrichtung zum Fräsen von Schienenköpfen der in einer Bettung angeordneten Gleisschienen, mit einem rotierend angetriebenen Fräsmesserkopf, der in einem einen Fräsmesserkopfantrieb tragenden Fahrwerk gelagert ist, wobei der Fräsmesserkopf wenigstens einen Schneidenzahn aus mehreren Schneidplatten zum Fräsen der Schienenköpfe aufweist, wobei jede Schneidplatte auf der Lauffläche der Gleisschiene eine Spur bildet und jeder Schneidenzahn eine mit der Anzahl zu fräsender Teilbögen beziehungsweise Spuren des jeweiligen Schienenkopfes übereinstimmende Anzahl der Schneidplatten umfasst.

Die Erfindung betrifft weiterhin ein Verfahren zum Wechsel von Schneidplatten bei einer verfahrbaren Vorrichtung zum Fräsen von Schienenköpfen der in einer Bettung angeordneten Gleisschienen, mit einem rotierend angetriebenen Fräsmesserkopf umfassend wenigstens einen Schneidenzahn aus mehreren Schneidplatten.

Das Profil eines Schienenkopfes setzt sich aus annähernd kreisförmigen Teilbögen verschiedener Radien zusammen, wobei jeder Teilbogen auf der Lauffläche der Gleisschiene eine Spur bildet. Der Fräsmesserkopf beziehungsweise jeder Schneidenzahn umfasst so viele Schneidplatten, wie Teilbögen beziehungsweise Spuren des jeweiligen Schienenkopfes zu fräsen sind.

Fräsen bezeichnet das spanabhebende Bearbeiten von Werkstoffen, beispielsweise Metall, mittels eines Fräswerkzeuges. Dabei wird die zur Spanabhebung notwendige Schnittbewegung durch Rotation des Schneidewerkzeuges gegenüber dem ortsfest gehaltenen Werkstück erzeugt.

Eine verfahrbare Vorrichtung zum Fräsen von Schienenköpfen ist in der Druckschrift DE 10 2006 008 093 A1 beschrieben. Bei dieser Vorrichtung werden die Schienenköpfe der in einem Gleisbett angeordneten Gleisschienen mittels eines rotierend angetriebenen Fräsmesserkopfes bearbeitet. Der Fräsmesserkopf ist in einem Fahrwerk der auf den Gleisschienen verfahrbaren Vorrichtung gelagert und umfasst mehrere Schneidplatten. Die Schneidplatten sind einzeln lösbar an dem Fräsmesserkopf fixiert.

Ausgehend von diesem Stand der Technik liegt der Erfindung die Aufgabe zugrunde, eine gattungsgemäße Vorrichtung zum Fräsen von Schienenköpfen bei Schienen von in einer Bettung angeordneten Gleisen und ein Verfahren zum Wechsel der Schneidplatten bei einer derartigen Vorrichtung zur Verfügung zu stellen, wobei der zeitliche Aufwand für den Wechsel der Schneidplatten minimiert und/oder die Standzeit der Schneidplatten maximiert und/oder eine Bearbeitung der Gleise unter Beibehaltung eines hochwertigen Fräsbildes erreicht werden.

Diese Aufgabe wird sowohl durch die im Anspruch 1 angegebene Vorrichtung als auch durch das im Anspruch 11 angegebene Verfahren gelöst. Die weitere Ausgestaltung der Erfindung ist den Unteransprüchen zu entnehmen.

Erfindungsgemäß ist also eine verfahrbare Vorrichtung zum Fräsen von Schienenköpfen der in einer Bettung angeordneten Gleisschienen, mit einem rotierend angetriebenen Fräsmesserkopf, der in einem einen Fräsmesserkopfantrieb tragenden Fahrwerk gelagert ist, vorgesehen, bei welcher der Fräsmesserkopf einen scheibenförmigen Werkzeugträger aufweist, der peripher angeordnete, mit Schneidplatten bestückte Kassetten aufweist, welche an mehreren lösbar mit dem Werkzeugträger verbundenen Trägersegmenten angeordnet sind, wobei der Werkzeugträger mit dem Fräsmesserkopfantrieb verbunden ist. Durch diese Unterteilung des Fräsmesserkopfes in einen Werkzeugträger, welcher an seinem Umfang mehrere beliebig austauschbare Trägersegmente aufnimmt, an denen wiederum jeweils mehrere Kassetten befestigt sind, wobei an jeder der Kassetten mehrere Schneidplatten angeordnet sind, wird es möglich, den zeitlichen Aufwand für den Wechsel der Schneidplatten an dem Fräsmesserkopf zu minimieren. Bei einem einteiligen Fräsmesserkopf, wie bei Fräsvorrichtungen für die Schienenbearbeitung nach dem Stand der Technik üblich, müssen bei einer Abnutzung der Schneidplatten die einzelnen Schneidplatten von dem Fräsmesserkopf gelöst und neue Schneidplatten an dem Fräsmesserkopf justiert und fixiert werden. Um diesen aufwendigen Wechsel der Schneidplatten nicht im Gleisbett, also in einem gesperrten Gleis durchführen zu müssen, wird in der Regel der gesamte Fräsmesserkopf ausgetauscht. Der Wechsel des Fräsmesserkopfes wird dabei vor der Einfahrt in das für die Bearbeitung gesperrte Gleis vorgenommen.

Die erfindungsgemäße Segmentierung des Fräsmesserkopfes erlaubt es auch, Fräsmesserköpfe mit Durchmessern von mehr als zwei Metern und/oder einer Masse von über 250 Kilogramm zu realisieren, da bei einem Wechsel der Schneidplatten diese wegen der Befestigung in Gruppen an einem Trägersegment und/oder einer Kassette schnell ausgetauscht werden können. Dabei sind die einzelnen Trägersegmente mit den daran angeordneten Kassetten in Maß und Masse um ein Vielfaches kleiner dimensioniert als der gesamte Fräsmesserkopf, wodurch diese einfach manuell und/oder automatisch gehandhabt werden können.

Da ein Fräsen der Gleisschienen mit Gleis- oder Streckensperrungen einhergeht und in der Regel in der Nacht durchgeführt wird, ist es insbesondere bei einem Verschleiß der Schneidplatten während der Bearbeitung der Schiene erforderlich, den Wechsel der Schneidplatten schnell und einfach zu ermöglichen. Bei dem Stand der Technik ist es üblich, dass für einen solchen Fall ein mit neuen Schneidplatten bestückter Fräsmesserkopf bereitgehalten und gegen den Fräsmesserkopf mit den abgenutzten Schneidplatten ausgetauscht wird. Da aber ein kompletter Fräsmesserkopf schwer und unhandlich ist, wird dieser nur in kleinen Durchmessern hergestellt, welche nur eine geringe Vorschubgeschwindigkeit erlauben. Beim bekannten Wechsel des Fräsmesserkopfes muss dieser von einer Antriebswelle abgezogen werden. Für diese Tätigkeit muss häufig auch das Nachbargleis gesperrt werden.

Durch die Erfindung ist es möglich, schnell und einfach verschleißabhängig mehrere Schneidplatten zu wechseln, da an dem Fräsmesserkopf nur einzelne Trägersegmente getauscht und mit diesen ganze Gruppen von Schneidplatten gewechselt werden. Aufgrund der kleineren Maße der Trägersegmente gegenüber einem gesamten Fräsmesserkopf ist der Austausch auch in situ, also im gesperrten Gleis, bei einer nur kurzen Unterbrechung der Gleisbearbeitung möglich. Für den Austausch der Trägersegmente muss niemand die Vorrichtung verlassen. Die Erfindung erlaubt es somit, einen Wechsel der Schneidplatten bei einer auf dem zu bearbeitenden Gleis stehenden Vorrichtung vorzunehmen, ohne dass Arbeiten im Gleis oder eine Sperrung benachbarter Gleise erforderlich sind.

Die Vorrichtung ist mittels des Fahrwerkes zum Verfahren, insbesondere auf der zu bearbeitenden Gleisschiene, vorgesehen. Die Vorschubrichtung der Vorrichtung ist nicht festgelegt. Die Vorschubrichtung der Vorrichtung und die Drehrichtung des Fräsmesserkopfes bestimmen, ob der Fräsmesserkopf im Gleichlauf oder im Gegenlauf arbeitet. Es hat sich als vorteilhaft erwiesen, dass der Fräsmesserkopf mit der Vorschubrichtung in einem Gleichlauf bewegt wird. Der auch als Trägerscheibe bezeichnete Werkzeugträger des Fräsmesserkopfes ist an einer Welle und/oder einem Spurkranz gelagert.

Erfindungsgemäß ist ebenso vorgesehen, dass an dem Werkzeugträger des Fräsmesserkopfes peripher zumindest zwei mit Schneidplatten bestückte und sich hinsichtlich der Anzahl der Schneidenzähne und/oder der Abstände der Schneidenzähne zueinander und/oder der Spanwinkel der einzelnen Schneidplatten und/oder der Anstellwinkel der einzelnen Schneidplatten unterscheidende Kassetten angeordnet sind. Zur Erreichung einer besonders gut wirkenden Differentialteilung sind an dem Fräsmesserkopf nur sich unterscheidende Kassetten angeordnet. Sofern mehrere identische Kassetten an dem Fräsmesserkopf angeordnet sind, ist es vorteilhaft, dass alle Drehwinkel zwischen benachbarten identischen Kassetten voneinander abweichen. Die Differentialteilung ist erfindungsgemäß einstellbar, da die einzelnen Kassetten lösbar mit dem Fräsmesserkopf verbunden sind und somit durch den Austausch bereits einer einzigen Kassette mit einer sich von dieser unterscheidenden Kassette schnell und einfach eine andere Differentialteilung erreicht wird. Aufgrund der beliebigen Austauschbarkeit aller Kassetten, auch untereinander, wobei insbesondere jede Kassette an jeder Stelle des Fräsmesserkopfes positioniert werden kann, ist die Differentialteilung variabel an die Arbeits- und Umgebungsbedingungen anpassbar. Eine vorteilhafte Weiterbildung des Fräsmesserkopfes ist durch wenigstens eines der vorstehend genannten Merkmale vorgesehen.

Günstig ist es, dass an einem Trägersegment mehrere Kassetten, auch Messerträger genannt, angeordnet sind. Weiterhin sind an den Kassetten mehrere Schneidplatten angeordnet. Die Segmentierung ermöglicht den schnellen und einfachen Wechsel größerer Gruppen von Schneidplatten durch den Austausch der Trägersegmente. Die weitere Unterteilung, bei der an jedem Trägersegment mehrere Kassetten angeordnet sind und an den Kassetten jeweils mehrere Schneidplatten befestigt sind, erleichtert den Austausch kleiner Gruppen von Schneidplatten. Bei der erfindungsgemäßen Unterteilung muss insbesondere in dem Arbeitsraum der Vorrichtung nicht jede individuelle Schneidplatte ausgerichtet und justiert werden. Die Wartung und der Wechsel der Schneidplatten an den Kassetten kann durch einen Austausch ganzer Kassettensätze entfernt von der Vorrichtung, beispielsweise in einer dafür eingerichteten Werkstatt erfolgen, ohne dass dies den Betrieb der Vorrichtung einschränkt.

Durch einen stetigen, insbesondere alternierenden Austausch nur einiger der Kassetten eines Trägersegmentes wird eine gleichmäßige Abnutzung der Schneidplatten des Fräsmesserkopfes und ein kontinuierlich hochwertiges Fräsbild erreicht.

Als günstig erwiesen hat es sich, dass die Trägersegmente und die Kassetten für eine universelle Befestigung jeder einzelnen der Kassetten an jedem der Trägersegmente und in jeder Position an einem Trägersegment eingerichtet sind. Hierdurch wird einerseits der Austausch erleichtert, da auf eine exakte Zuordnung der Kassetten zu bestimmten Positionen nicht geachtet werden muss. Andererseits wird hierdurch die Möglichkeit eröffnet, einfach und schnell die einzelnen Trägersegmente und somit den gesamten Fräsmesserkopf je nach Einsatzsituation individuell zu bestücken.

Hierzu hat es sich als vorteilhaft erwiesen, dass an jedem der Trägersegmente die gleiche Anzahl Kassetten lösbar befestigt ist, wobei an einem Trägersegment vorzugsweise fünf bis acht Kassetten angeordnet sind. Darüber hinaus sind die Trägersegmente und der Werkzeugträger so universell ausgeführt, dass jedes der Trägersegmente für eine Befestigung in jeder zur Aufnahme eines Trägersegmentes vorgesehenen Position an dem Werkzeugträger möglich ist.

Dabei ist es besonders praktisch, dass der Werkzeugträger eine polygonale Querschnittsform aufweist, also die äußere Kontur des Umfanges des Werkzeugträgers einem gleichmäßigen Vieleck entspricht. Dabei besteht der Umfang des Werkzeugträgers aus mehreren, insbesondere mehr als sechs, vorzugsweise acht bis zwölf Anlageflächen. Jede der Anlageflächen ist zur Aufnahme eines der baugleichen Trägersegmente vorgesehen. Durch die beliebige Austauschbarkeit der Trägersegmente an dem Werkzeugträger werden die Vorbereitung der Trägersegmente und die Montage der Trägersegmente an dem Werkzeugträger erleichtert.

Die Anlageflächen sind an der radialen Außenseite des Werkzeugträgers als Sekantenflächen ausgebildet. Die Anlageflächen sind vorzugsweise im Punkt des geringsten Abstandes zur Drehachse senkrecht zum Radius orientiert.

Bei der Handhabung während des Wechsels der Trägersegmente hat sich bei allen Größen der Fräsmesserköpfe stets eine gerade Anzahl an Trägersegmenten als besonders praktisch erwiesen. Von der Erfindung sind Ausführungsformen mit unterschiedlichen Teilungen des Werkzeugträgers und einer entsprechenden Anzahl an Trägersegmenten eingeschlossen. Bei kleinen Fräsmesserköpfen, beispielsweise mit einem Durchmesser von 200 bis 600 Millimetern, hat sich die Anzahl von 3 bis 5 Trägersegmenten als günstig erwiesen. Bei Fräsmesserköpfen mit mittlerem Durchmesser von 500 bis 1.200 Millimetern hat sich die Anzahl von 4 bis 8 Trägersegmenten als günstig erwiesen. Bei großen Fräsmesserköpfen mit einem Durchmesser von 1.000 bis 2.500 Millimetern ist es vorteilhaft, mehr als 7 Trägersegmente vorzusehen. Vorzugsweise ist die Verwendung eines Fräsmesserkopfes mit einem Durchmesser zwischen 1.400 und 1.600 Millimetern vorgesehen.

Erfindungsgemäß ist zum Wechsel der Schneidplatten auch ein Verfahren vorgesehen, bei dem bei einem Erreichen eines festgelegten Abnutzungskriteriums der Schneidplatten mehrere Schneidplatten als eine Gruppe gleichzeitig ausgetauscht werden. Hierdurch ist es möglich, mit geringem Aufwand auch bei einer auf der zu bearbeitenden Gleisschiene stehenden Vorrichtung schnell die Schneidplatten des Fräsmesserkopfes der Vorrichtung zu wechseln. Übliche Abnutzungskriterien sind beispielsweise der reale Verschleiß, die Betriebsdauer, die Bearbeitungsstrecke der einzelnen Schneidplatten und/oder der Schneidplatten-Gruppen und/oder des Fräsmesserkopfes. Im Gegensatz zum Stand der Technik ist ein vorbeugender Austausch der Schneidplatten nicht erforderlich. Erst wenn eines oder mehrere der Abnutzungskriterien eintreten, werden die Schneidplatten gewechselt, wobei lediglich jene Trägersegmente und/oder Kassetten an dem Fräsmesserkopf ausgetauscht werden, an denen Schneidplatten angeordnet sind, für die das Abnutzungskriterium erfüllt ist.

Vorzugsweise ist die Vorrichtung zur Anwendung des Verfahrens durch wenigstens eines der vorstehend genannten Merkmale und/oder durch die Merkmale zumindest eines der Ansprüche 1 bis 10 gekennzeichnet.

Der gleichzeitige Austausch mehrerer Schneidplatten als eine Gruppe erfolgt vorzugsweise, indem von dem scheibenförmigen Werkzeugträger des Fräsmesserkopfes nacheinander eines oder mehrere der Trägersegmente gegen ein anderes bereitgehaltenes Trägersegment getauscht werden. An jedem der Trägersegmente sind verschiedene Kassetten angeordnet, von denen zumindest eine mit mehreren der peripher angeordneten Schneidplatten bestückt ist. Für den Austausch der Trägersegmente wird zunächst das an dem Werkzeugträger befestigte Trägersegment von diesem gelöst und dann aus seiner Position an dem Fräsmesserkopf entfernt. Anschließend wird an dieser Position ein bereitgehaltenes anderes Trägersegment an dem Werkzeugträger angeordnet und schließlich mit dem Werkzeugträger verbunden. Während des Austausches eines Trägersegmentes wird die Rotation des Fräsmesserkopfes blockiert. Bei einem Austausch mehrerer oder aller Trägersegmente wird nach dem Austausch eines Trägersegmentes der Fräsmesserkopf so weit gedreht, bis das nächste zum Austausch vorgesehene Trägersegment in einer für die Entnahme günstigen Position ist. Mehrere Trägersegmente eines Fräsmesserkopfes werden somit nacheinander ausgetauscht. Trotz dieses seriellen Austauschs der Trägersegmente ermöglicht die Erfindung einen schnellen Wechsel mehrerer Schneidplatten. Somit ist der Wechsel der Schneidplatten bei sehr kurzer Arbeitsunterbrechung möglich.

Die bereitgehaltenen Trägersegmente werden einem Magazin entnommen und die von dem Fräsmesserkopf entfernten Trägersegmente werden in einem Magazin abgelegt. Vorzugsweise handelt es sich dabei um dasselbe Magazin, was den Platzbedarf in der Vorrichtung reduziert. Es hat sich als günstig erwiesen, dass das Magazin wenigstens eine Aufnahme mehr hat als an dem Fräsmesserkopf Anlageflächen für Trägersegmente vorgesehen sind. Hierdurch ist es möglich, dass für ein vom Fräsmesserkopf entferntes Trägersegment stets eine freie Aufnahme zur Verfügung steht, an der das Trägersegment abgelegt werden kann, bevor dem Magazin ein anderes Trägersegment, beispielsweise mit frischen Schneidplatten, entnommen wird.

Vorteilhaft ist es, dass die Vorrichtung eine von dem Fahrwerk getragene Arbeitskabine aufweist, welche durch parallel zur Fahrtrichtung orientierte Kabinenwände begrenzt ist. Die Arbeitskabine besteht aus zwei Räumen - dem Rüstraum und dem Fräsraum. Zwischen den beiden Räumen ist eine verschließbare Öffnung vorgesehen. Diese ermöglicht es, Zonen unterschiedlicher Verschmutzung zu schaffen und den Fräsraum, insbesondere bei einem Betrieb des Fräsmesserkopfes, auch akustisch von dem Rüstraum zu trennen. Innerhalb des Fräsraumes sind der Fräsmesserkopf, der Fräsmesserkopfantrieb und die Verstellmittel angeordnet. Das Öffnen der Öffnung ermöglicht einen Austausch der Trägersegmente, ohne dass jemand hierzu die Vorrichtung verlassen muss. Die Erfindung erlaubt es somit, einen Wechsel der Schneidplatten bei einer auf dem zu bearbeitenden Gleis stehenden Vorrichtung vorzunehmen, ohne dass Arbeiten im Gleis oder eine Sperrung benachbarter Gleise erforderlich sind.

Die Öffnung kann als ein einfaches Rolltor oder ein Vorhang ausgeführt sein. Es ist aber auch möglich, die Öffnung in Form einer Schleuse zu gestalten. Zweck der verschließbaren Öffnung ist im Wesentlichen, die im Fräsraum anfallende Verschmutzung aus Staub und Spänen von dem als Werkstatt vorgesehenen Rüstraum fernzuhalten.

Da die Tätigkeiten in der durch die Kabinenwände geschützten Arbeitskabine verrichtet werden können, ist es sogar möglich, dass die benachbarten Gleise bei einer Arbeitsunterbrechung weiter mit Regelgeschwindigkeit befahren werden können. Darüber hinaus bietet die Arbeitskabine Schutz vor Witterung und zahlreiche ergonomische Vorteile, beispielsweise kann im Rüstraum eine ausreichende, blendfreie Beleuchtung der Arbeitsplätze eingerichtet werden. Bei entsprechender Schwingungsentkopplung des Rüstraumes von den Drehgestellen und/oder dem Fräsraum kann in dem Rüstraum auch während der Überstellfahrt und/oder während des Betriebes des Fräsmesserkopfes gearbeitet werden.

Als besonders praktisch erwiesen hat es sich, dass in der Arbeitskabine eine Hubvorrichtung angeordnet ist, die einen Segmentgreifer zum Transportieren der Trägersegmente umfasst. In einer einfachen Ausführungsform ist der Segmentgreifer in der Rotationsebene des Fräsmesserkopfes parallel und senkrecht zur Fahrtrichtung translatorisch beweglich. Gemäß einer Weiterbildung dieser Ausführungsform ist der Segmentgreifer um eine Achse, insbesondere um eine zur Rotationsebene des Fräsmesserkopfes parallel orientierte Achse rotatorisch sowie parallel und senkrecht zur Fahrtrichtung translatorisch beweglich. Die Bewegung senkrecht zur Fahrtrichtung ist vorzugsweise radial zur Drehachse des Fräsmesserkopfes orientiert. Mittels der Hubvorrichtung können einzelne Trägersegmente von dem Fräsmesserkopf zu dem Magazin und umgekehrt bewegt werden. Die Hubvorrichtung kann dabei der motorischen Unterstützung der Arbeitskräfte bei einem manuellen Austausch der Trägersegmente dienen oder für einen vollautomatischen Wechsel der Trägersegmente eingerichtet sein. Zusätzlich kann die Hubvorrichtung mit der Möglichkeit ausgestattet sein, den Segmentgreifer parallel zur Drehachse des Fräsmesserkopfes zu bewegen.

Die einzelnen Trägersegmente sind mit dem Werkzeugträger über eine Verriegelungseinrichtung verbunden. Die Verriegelungseinrichtung ist zur werkzeuglosen Betätigung vorgesehen und kann manuell oder automatisiert ausgelöst werden. Die Verriegelungseinrichtung besteht vorzugsweise aus zumindest einem passiven und wenigstens einem aktiven Teil. Dabei ist jedes der Trägersegmente mit zumindest einem passiven Teil ausgestattet. An jeder der Anlageflächen des Werkzeugträgers und/oder an jeder der Aufnahmen des Magazins ist weiterhin wenigstens ein aktiver Teil der Verriegelungseinrichtung vorgesehen. Die gemeinsame Verwendung der Verriegelungseinrichtung und der Hubvorrichtung ermöglicht einen automatisierten Austausch der Trägersegmente.

Durch die Möglichkeit der werkzeuglosen Betätigung der Verriegelungseinrichtung wird der Austausch der Schneidplatten erleichtert und die Vorrichtung ist schneller wieder einsatzbereit. Sobald ein Trägersegment an dem Werkzeugträger anliegt, wird die Halteeinrichtung betätigt und so das Trägersegment an dem Werkzeugträger fixiert.

Die Anlageflächen an dem Werkzeugträger und/oder die Trägersegmente sind so ausgeführt, dass ein Anlegen beziehungsweise Abnehmen eines Trägersegmentes von dem Werkzeugträger bei geöffneter Verriegelungseinrichtung durch zumindest eine translatorische Bewegung entlang einer Achse erfolgt, welche zur Drehachse des Fräsmesserkopfes radial und/oder axial orientiert ist. Die Trägersegmente und der Werkzeugträger sind so ausgeführt, dass die Trägersegmente bei deren Austausch unabhängig voneinander handhabbar sind. So ist es möglich, auch nur einzelne Trägersegmente des Fräsmesserkopfes auszutauschen. Der auch als Tragscheibe bezeichnete Werkzeugträger hat zur Aufnahme der Werkzeugsegmente mehrere Anlageflächen. Jedes Trägersegment hat zumindest eine zu einer Anlagefläche korrespondierend ausgeführte Befestigungsfläche. So können die Trägersegmente einzeln an dem Werkzeugträger fixiert beziehungsweise von dem Werkzeugträger gelöst werden.

Gemäß einer Weiterbildung der Erfindung ist vorgesehen, dass der Austausch von an den Trägersegmenten angeordneten Kassetten und/oder der Austausch von an den Kassetten einzeln befestigten Schneidplatten bei einem von dem Werkzeugträger abgenommenen Trägersegment beziehungsweise bei einer von dem Werkzeugträger abgenommenen Kassette beispielsweise während des Betriebes des Fräsmesserkopfes und/oder während der Bewegung der Vorrichtung durchgeführt wird. Hierzu werden die Trägersegmente in dem Rüstraum der Arbeitskabine der Vorrichtung bearbeitet. Dabei werden entweder direkt einzelne Schneidplatten ausgetauscht oder zunächst die Schneidplatten tragenden Kassetten von den Trägersegmenten abgenommen und durch andere Kassetten ersetzt. Der Wechsel einzelner oder aller Schneidplatten an den vorzugsweise abgenommenen Kassetten kann ebenso in dem als Werkstatt eingerichteten Rüstraum erfolgen. Durch die Verlagerung der aufwendigen Demontage und Montage einzelner Schneidplatten an den Kassetten an einen speziell dafür eingerichteten Ort und die Bereithaltung zumindest eines Satzes weiterer mit Schneidplatten bestückter Kassetten ist es möglich, dass die Vorrichtung zügig den Betrieb wieder aufnehmen kann und nicht auf die individuelle Bearbeitung aller Schneidplatten warten muss.

Bei dem Verfahren ist es auch vorteilhaft, dass innerhalb der Vorrichtung an einem von dem Fräsmesserkopf abgenommenen Trägersegment eine, mehrere oder alle Kassetten gewechselt werden. Dieser Wechsel kann sogar während des Betriebes des Fräsmesserkopfes und/oder während der Bewegung der Vorrichtung durchgeführt werden. Als praktisch erwiesen hat es sich, dass der Austausch der Schneidplatten an den Messerträgern entweder in dem Rüstraum oder entfernt von der Vorrichtung, beispielsweise in einer speziell eingerichteten Werkstatt, durchgeführt wird.

Der Wechsel der Kassetten an den Trägersegmenten wird in dem Rüstraum der Arbeitskabine vorzugsweise an einem Arbeitstisch durchgeführt. Der Arbeitstisch ist mit mehreren Aufnahmen ausgestattet. Die Gesamtheit der einem Fräsmesserkopf zugeordneten Aufnahmen wird auch als Magazin bezeichnet. Die Aufnahmen können Fächer sein, sodass das Magazin in der Art eines Setzkastens ausgeführt ist. Die einzelnen Aufnahmen können auch als aktive Teile einer Verriegelungseinrichtung realisiert sein.

Als praktisch erwiesen hat sich, dass die Aufnahmen in einer parallel zur Rotationsebene des Fräsmesserkopfes orientierten Achse hintereinander angeordnet sind und/oder das Magazin zwischen einer Wartungsposition und einer in der Rotationsebene des Fräsmesserkopfes liegenden Wechselposition verschieblich gelagert ist. Die Verschiebung des Magazins erfolgt parallel zur Drehachse, also senkrecht zur Rotationsebene des Fräsmesserkopfes. Hierdurch ist es möglich, dass für den Wechsel der Trägersegmente der Segmentgreifer der Hubvorrichtung lediglich in der Rotationsebene des Fräsmesserkopfes bewegt werden muss und somit einfacher und leichter ausgeführt werden kann. Darüber hinaus wird bei einem in Wartungsposition gehaltenen Magazin zwischen der Kabinenwand und dem Arbeitstisch ein Bewegungsraum frei, in dem sich zum Wechsel der Schneidplatten und/oder Kassetten Personal aufhalten kann. In dem Magazin wird ein zweiter Satz Trägersegmente gelagert, nämlich vor einem Wechsel der Trägersegmente ein mit frischen Schneidplatten vorbereiteter Satz beziehungsweise nach dem Wechsel die Trägersegmente mit den verbrauchten Schneidplatten.

Alternativ oder ergänzend zur Verschiebung des Magazins ist der Segmentgreifer oder die gesamte Hubvorrichtung parallel zur Drehachse, also senkrecht zur Rotationsebene des Fräsmesserkopfes, translatorisch beweglich ausgeführt.

Der Fräsmesserkopf und der Fräsmesserkopfantrieb sind gemeinsam an den Verstellmitteln gelagert. Der Fräsmesserkopf und der Fräsmesserkopfantrieb sind gemeinsam in einer senkrecht zur Gleisschiene orientierten Ebene verstellbar. Diese Verstellung dient insbesondere der Verlagerung des Fräsmesserkopfes zwischen einer Arbeitsposition, bei der der Fräsmesserkopf in Eingriff mit der Gleisschiene ist, und einer Überstellposition, welche für eine Überstellfahrt der Vorrichtung zum Einsatzort beziehungsweise von diesem weg oder bei der Überfahrt von speziellen Gleiseinbauten wie Weichen eingenommen wird.

Gemäß einer besonderen Ausführungsform sind in dem Fräsraum zwei insbesondere voneinander unabhängig angetriebene und verstellbare Fräsmesserköpfe angeordnet, wobei jeder Fräsmesserkopf einer Gleisschiene zugeordnet ist. Dabei kann in der Arbeitskabine entweder eine einzige zwischen den Rotationsebenen der beiden Fräsmesserköpfe verstellbare Hubvorrichtung vorgesehen sein oder es sind in der Arbeitskabine zwei jeweils einem der beiden Fräsmesserköpfe zugeordnete Hubvorrichtungen angeordnet.

Die Anlageflächen des Werkzeugträgers und die Befestigungsflächen der Trägersegmente sind jeweils eben ausgestaltet. Bei einer besonderen Ausführungsform ist vorgesehen, dass die Ebenheit lokal von Teilen der Verriegelungseinrichtung und/oder optionalen Kraftaufnehmern unterbrochen ist. Als besonders praktisch erwiesen hat es sich, dass die einander zugeordneten Anlageflächen und Befestigungsflächen konturparallel ausgeführt sind. Hierdurch ist eine passgenaue Montage und Demontage der Trägersegmente ebenso möglich wie das Entfernen eines Trägersegmentes von dem Werkzeugträger beziehungsweise das Heranführen eines Trägersegmentes an den Werkzeugträger in einer in Bezug auf die Raumgeometrie einfachen Bewegung. Insbesondere sind die Trägersegmente und der Werkzeugträger für ein zur Drehachse des Werkzeugträgers radial und/oder axial orientiertes Anlegen beziehungsweise Abnehmen der Trägersegmente von dem Werkzeugträger ausgeführt.

Zum lösbaren Verbinden der Trägersegmente mit dem Werkzeugträger weist der Fräsmesserkopf Verriegelungseinrichtungen auf. Mittels der Verriegelungseinrichtungen ist es auch möglich, die Trägersegmente relativ zueinander und am Werkzeugträger auszurichten, zu justieren und die Trägersegmente mit dem Werkzeugträger lösbar zu verbinden. Dabei sind die Verriegelungseinrichtungen zur werkzeuglosen Betätigung vorgesehen. Gemäß einer bevorzugten Ausführungsform wirken die Verriegelungseinrichtungen radial zur Drehachse. Mittels der Verriegelungseinrichtungen werden die Trägersegmente an dem Werkzeugträger relativ zu diesem in allen Raumrichtungen ausgerichtet. Die Verriegelungseinrichtungen nehmen insbesondere radial und tangential zur Drehachse wirkende Kräfte auf und übertragen diese von den Trägersegmenten an den Werkzeugträger. Es hat sich als günstig erwiesen, dass eine Verriegelungseinrichtung aus einer Paarung von einem insbesondere rotationssymmetrisch ausgeführten Zapfen und einer Buchse besteht. Bei einer anderen Ausführungsform besteht eine Verriegelungseinrichtung aus einer Paarung von Nut und Feder. Je nach Größe des Trägersegmentes sind zwei bis vier, vorzugsweise drei Verriegelungseinrichtungen vorgesehen.

Günstig ist es, dass der Zapfen und/oder die Feder eine Hinterschneidung aufweist, auf welche eine Spanneinrichtung der Buchse und/oder der Nut wirkt. Die Spanneinrichtung dient der Zentrierung und der Fixierung des Trägersegmentes an dem Werkzeugträger. Abweichend davon kann die Spanneinrichtung auch Bestandteil von Zapfen und/oder Feder sein und die Hinterschneidung in der Nut und/oder der Buchse ausgebildet sein. Eine derartige Haltevorrichtung mit Zapfen und Buchse ermöglicht in einem Bauteil und mit einem Arbeitsschritt sowie ohne eine manuelle Handhabung von Werkzeugen ein Fixieren, Halten und Ausrichten der Werkzeugsegmente an der Trägerscheibe. Die Halteeinrichtungen sind vorzugsweise mittels eines druckbeaufschlagten Fluids schaltbar ausgeführt.

Durch eine elektrisch und/oder hydraulisch und/oder pneumatisch arbeitende Spanneinrichtung kann das Lösen und Befestigen automatisiert und/oder werkzeuglos erfolgen. Auch ein vollautomatischer Wechsel der Werkzeugsegmente ist mittels einer Verriegelungseinrichtung umfassend eine ansteuerbare Spanneinrichtung möglich.

Eine Ausführungsform des Fräsmesserkopfes mit einer Verstärkung zur Aufnahme radialer, tangentialer und/oder axialer Kräfte weist an den Anlageflächen und Befestigungsflächen Kraftaufnehmer auf. Die Kraftaufnehmer sind in Form von Passstiften und/oder als Paarung von Nut und Feder ausgeführt. Auch die Kraftaufnehmer sind zur Ausrichtung und zum Halten der Trägersegmente an dem Werkzeugträger geeignet. Weiterhin können die Kraftaufnehmer eine insbesondere radial wirkende Hinterschneidung aufweisen.

Als Vorteil erwiesen hat sich, dass an dem Fräsmesserkopf die Anordnung der einzelnen Schneidplatten unterschiedlich ausgestaltet ist. Dabei ist vorgesehen, dass an wenigstens einem der Trägersegmente zumindest zwei sich hinsichtlich der Anzahl der Schneidenzähne und/oder der Abstände der Schneidenzähne zueinander und/oder der Spanwinkel der einzelnen Schneidplatten und/oder der Anstellwinkel der einzelnen Schneidplatten unterscheidende Kassetten angeordnet sind. Durch die ungleichmäßige Verteilung der Schneidplatten entlang des Umfanges des Fräsmesserkopfes ist es möglich, Schwingungen des Fräsmesserkopfes zu reduzieren und die damit einhergehenden Wellenmuster im Schliffbild zu verringern. Durch die individuelle und unregelmäßig wechselnde Anordnung der Schneidplatten werden Vibrationen in dem Fräsmesserkopf verringert und auch bei hoher Vorschubgeschwindigkeit eine gute Bearbeitungsqualität erreicht.

Eine solche variabel und bei einer Arbeitsunterbrechung einstellbare Differentialteilung, bei der die individuelle Anordnung der Schneidplatten in Abhängigkeit der Umweltbedingungen, der Eigenschaften des zu bearbeitenden Materials, der Witterungsbedingungen, der Form des Schienenkopfprofiles, der Stahlsorte, der Vorschubgeschwindigkeit, der Abtragstiefe oder der Rotationsgeschwindigkeit gewählt ist, kann besonders leicht durch eine individuelle Zusammenstellung unterschiedlich gestalteter Kassetten an einem Trägersegment beziehungsweise über den Umfang des Fräsmesserkopfes erreicht werden.

Ein Schneidenzahn umfasst acht bis neun Schneidplatten für die Schienenkopfkontur, die zueinander versetzt in mehreren, vorzugsweise zwei Reihen in Umlaufrichtung hintereinander angeordnet sind.

Weiterhin ist es günstig, dass die Vorrichtung Verstellmittel umfasst, welche zur Positionierung des Fräsmesserkopfes der Höhe und/oder der Seite nach geeignet sind. Eine Verstellung der Seite nach entspricht einer Verschiebung des Fräsmesserkopfes parallel zu dessen Drehachse. Eine Verstellung der Höhe nach betrifft den Abstand des Fräsmesserrades zu der Gleisschiene, insbesondere in vertikaler Richtung. Die Verstellung der Höhe nach kann durch eine translatorische und/oder eine rotatorische Bewegung der Drehachse des Fräsmesserkopfes erreicht werden.

Die Erfindung lässt verschiedene Ausführungsformen zu. Zur weiteren Verdeutlichung ihres Grundprinzips sind einige davon in der Zeichnung dargestellt und werden nachfolgend beschrieben. Die Zeichnung zeigt in
- Fig. 1: eine schematische Darstellung einer ersten Ausführungsform einer Vorrichtung zum Fräsen eines Schienenkopfes einer in einem Gleisbett angeordneten Gleisschiene in einer Seitenansicht;
- Fig. 2: eine schematische Darstellung der ersten Ausführungsform einer Vorrichtung zum Fräsen eines Schienenkopfes einer in einem Gleisbett angeordneten Gleisschiene in einer Draufsicht;
- Fig. 3: eine schematische Darstellung eines Arbeitstisches der in den Figuren 1 und 2 gezeigten Vorrichtung;
- Fig. 4: eine vergrößerte schematische Darstellung eines in den Figuren 1 und 2 dargestellten Fräsmesserkopfes der Vorrichtung;
- Fig. 5: eine schematische Darstellung einer Kassette der Vorrichtung;
- Fig. 6: eine schematische Darstellung einer ersten Variante einer Kassette in einer Seitenansicht;
- Fig. 7: eine schematische Darstellung einer zweiten Variante einer Kassette in einer Seitenansicht;
- Fig. 8: eine schematische Darstellung einer dritten Variante einer Kassette in einer Seitenansicht;
- Fig. 9: eine schematische Darstellung einer vierten Variante einer Kassette in einer Seitenansicht;
- Fig. 10: eine schematische Darstellung einer fünften Variante einer Kassette in einer Schnittdarstellung;
- Fig. 11: eine schematische Darstellung einer sechsten Variante einer Kassette in einer Schnittdarstellung;
- Fig. 12: eine schematische Darstellung einer siebten Variante einer Kassette in einer Draufsicht;
- Fig. 13: eine schematische Darstellung einer achten Variante einer Kassette in einer Seitenansicht;
- Fig. 14: eine schematische Darstellung eines Ausschnittes einer zweiten Ausführungsform der Vorrichtung in einer Schnittdarstellung;
- Fig. 15: eine schematische Darstellung eines Ausschnittes einer dritten Ausführungsform der Vorrichtung in einer Schnittdarstellung;
- Fig. 16: eine schematische Darstellung eines Ausschnittes einer vierten Ausführungsform der Vorrichtung in einer Schnittdarstellung;
- Fig. 17: eine schematische Darstellung eines Ausschnittes einer fünften Ausführungsform der Vorrichtung in einer Schnittdarstellung.

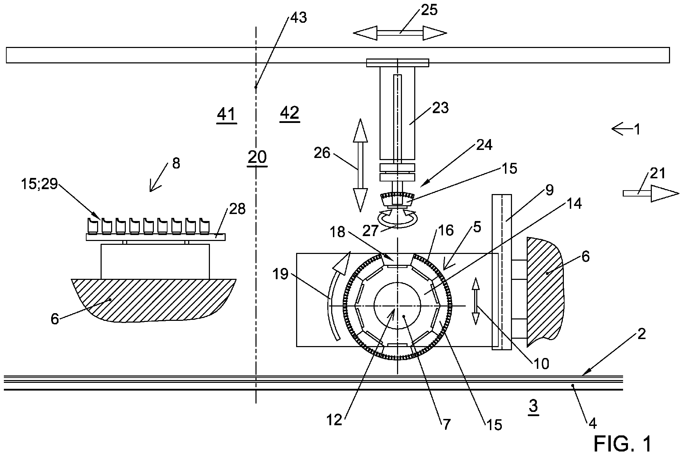

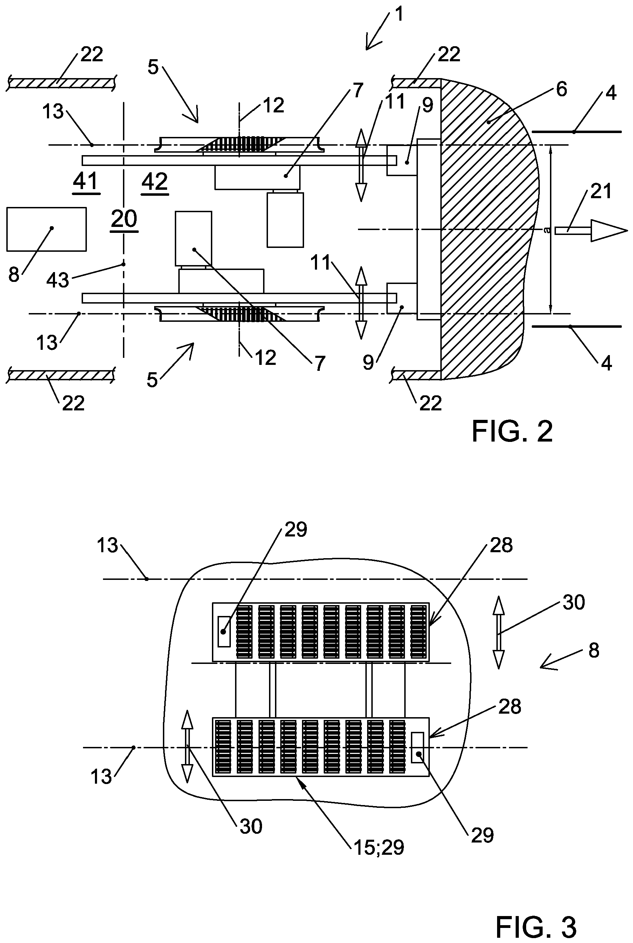

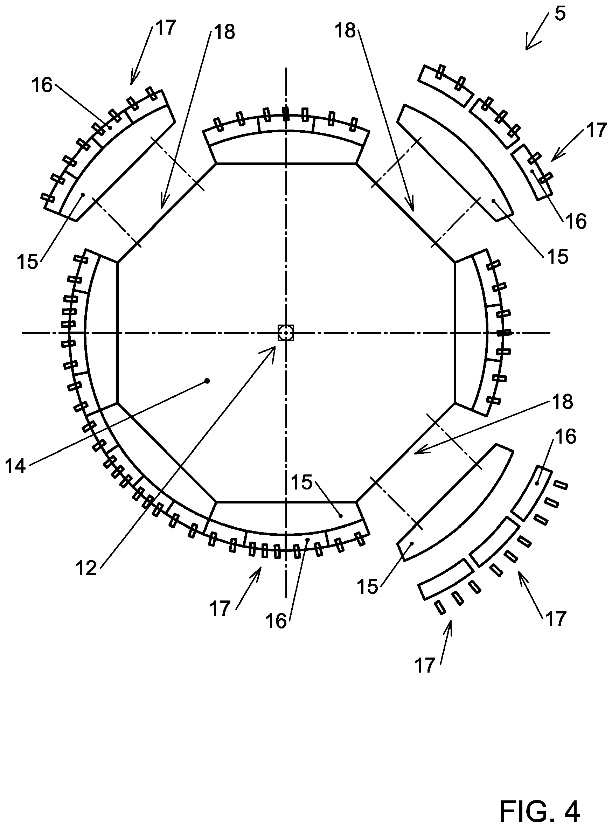

Die Figuren 1 und 2 zeigen eine erste Ausführungsform einer verfahrbaren Vorrichtung 1 zum Fräsen von Schienenköpfen 2 der in einer Bettung 3 angeordneten Gleisschienen 4, mit zwei unabhängig voneinander rotierend 19 angetriebenen Fräsmesserköpfen 5. Die Vorrichtung 1 umfasst ein Fahrwerk 6 zum Fahren auf den Gleisschienen 4. Das Fahrwerk 6 trägt für jeden Fräsmesserkopf 5 einen Fräsmesserkopfantrieb 7 und einen Arbeitstisch 8. Weiterhin trägt das Fahrwerk 6 für jeden Fräsmesserkopf 5 ein Verstellmittel 9 zur Positionierung des Fräsmesserkopfes 5 der Höhe 10 und/oder der Seite 11 nach. Angegeben sind auch die jeweiligen Drehachsen 12 und die Rotationsebenen 13 der Fräsmesserköpfe 5. Der Fräsmesserkopf 5 umfasst einen Werkzeugträger 14, an dem über den Umfang verteilt mehrere Trägersegmente 15 angeordnet sind. An jedem Trägersegment 15 sind mehrere Kassetten 16 angeordnet. Die Kassetten 16 tragen den wenigstens einen in den Figuren 4 bis 9 und 12 dargestellten Schneidenzahn 17 des Fräsmesserkopfes 5. Bei der dargestellten Ausführungsform hat der Werkzeugträger 14 Anlageflächen 18 für Trägersegmente 15.

Die Vorrichtung 1 hat eine von dem Fahrwerk 6 getragene Arbeitskabine 20, welche durch parallel zur Fahrtrichtung 21 orientierte Kabinenwände 22 begrenzt ist. Die Arbeitskabine 20 umfasst einen Rüstraum 41 und einen Fräsraum 42. Rüstraum 41 und Fräsraum 42 können durch eine einstellbare Trennwand 43 voneinander separiert werden. Die Trennwand 43 ist beispielsweise als ein Rolltor oder als ein Faltvorhang ausgeführt. Der Fräsmesserkopf 5 ist von der Arbeitskabine 20 aus zumindest teilweise zugänglich und innerhalb der Kabinenwände 22 positioniert. Neben dem Fräsmesserkopf 5 sind in dem Fräsraum 42 der Fräsmesserkopfantrieb 7 und die Verstellmittel 8 angeordnet. Jeder Fräsmesserkopf 5 ist gemeinsam mit seinem Fräsmesserkopfantrieb 7 an den Verstellmitteln 9 gelagert und in einer senkrecht zur Gleisschiene 4 orientierten Ebene zwischen einer Arbeitsposition und einer Überstellposition verstellbar. In den Figuren 1 und 2 ist der Fräsmesserkopf 5 in der Überstellposition dargestellt.

In der Arbeitskabine 20 ist weiterhin eine Hubvorrichtung 23 angeordnet. Die Hubvorrichtung 23 hat einen Segmentgreifer 24, welcher in der Rotationsebene 13 des Fräsmesserkopfes 5 translatorisch sowie zur Fahrtrichtung 21 parallel beweglich 25 und senkrecht beweglich 26 ist. Weiterhin ist der Segmentgreifer 24 senkrecht zur Fahrtrichtung 21 rotatorisch beweglich 27.

In der hier dargestellten Ausführungsform der Vorrichtung 1 ist zur Bearbeitung der Schiene 4 nur eine als Fahrtrichtung 21 angegebene Vorschubrichtung vorgesehen. Die Rotation 19 des Fräsmesserkopfes 5, auch Drehrichtung genannt, ist in Bezug auf die Fahrtrichtung 21 so eingestellt, dass der Fräsmesserkopf 5 im Gleichlauf arbeitet.

Die Figuren 1 bis 3 zeigen den in dem Rüstraum 41 der Arbeitskabine 20 vorgesehenen Arbeitstisch 8. Dieser hat zwei Magazine 28, von denen jedes mehrere Aufnahmen 29 für Trägersegmente 15 hat. Das Magazin 28 ist zwischen einer (oben dargestellten) Wartungsposition und einer in der Rotationsebene 13 des Fräsmesserkopfes 5 liegenden (unten dargestellten) Wechselposition verschieblich 30 gelagert. Unterhalb des Arbeitstisches 8 ist ein Sockel vorgesehen, in dem Platz für Werkzeuge und Betriebsaggregate der Vorrichtung 1 ist.

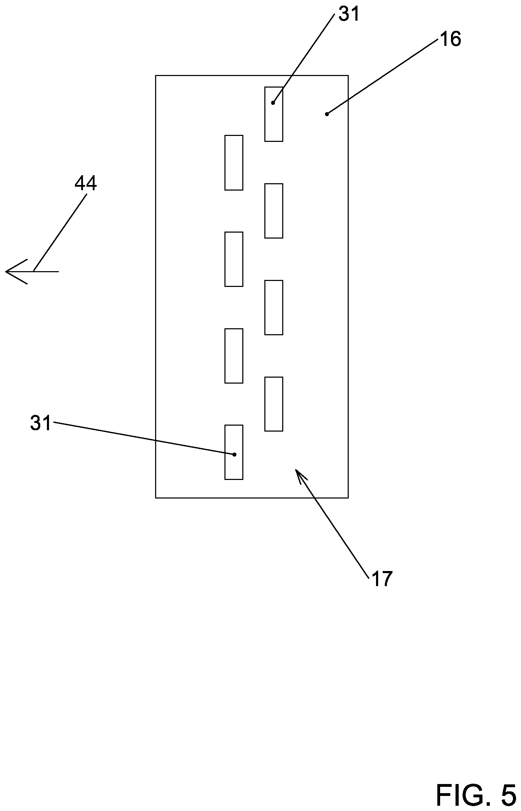

Figur 4 zeigt den bereits in den Figuren 1 und 2 beschriebenen Fräsmesserkopf 5 in einer vergrößerten Darstellung. Der Werkzeugträger 14 hat eine polygonale Querschnittsform und zehn Anlageflächen 18 zur Aufnahme einer entsprechenden Anzahl baugleicher Trägersegmente 15. Die Trägersegmente 15 sind an dem Werkzeugträger 14 werkzeuglos lösbar fixiert, wobei jedes einzelne der Trägersegmente 15 unabhängig von den anderen Trägersegmenten 15 von dem Werkzeugträger 14 gelöst werden kann. Jedes der Trägersegmente 15 trägt mehrere Kassetten 16. Die Kassetten 16 sind an den Trägersegmenten 15 lösbar fixiert. Jede der Kassetten 16 trägt wiederum wenigstens einen Schneidenzahn 17. Ein Schneidenzahn 17 besteht aus mehreren in Figur 5 gezeigten Schneidplatten 31. Die Schneidplatten 31 sind an den Kassetten 16 lösbar fixiert. Das Profil eines Schienenkopfes 2 setzt sich aus annähernd kreisförmigen Teilbögen verschiedener Radien zusammen, wobei jeder Teilbogen auf der Lauffläche der Gleisschiene 4 eine Spur bildet. Der Fräsmesserkopf 5 beziehungsweise jeder Schneidenzahn 17 weist so viele Schneidplatten 31 auf, wie Teilbögen beziehungsweise Spuren des jeweiligen Schienenkopfes 2 zu fräsen sind, wobei jeder Spur eine Schneidplatte 31 eines Schneidenzahnes 17 zugeordnet ist.

Figur 5 zeigt eine Kassette 16 mit einem Schneidenzahn 17, welcher neun Schneidplatten 31 umfasst. Die Schneidplatten 31 sind in vorzugsweise zwei Reihen hintereinander und alternierend zueinander versetzt angeordnet. Ein Pfeil 44 deutet die Bewegung der an einem Fräsmesserkopf 5 angeordneten Kassette 16 während der Rotation 19 eines Fräsmesserkopfes 5 an.

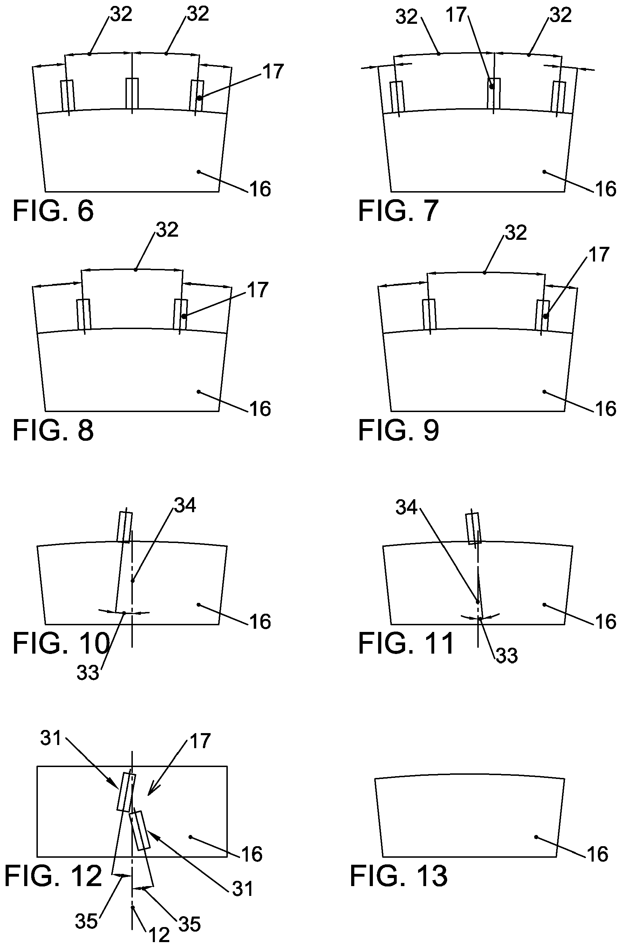

Die Figuren 6 bis 13 zeigen unterschiedliche Varianten der Gestaltung von Kassetten 16. Die Kassetten 16 unterscheiden sich einerseits in der an einer Kassette 16 angeordneten Anzahl der Schneidenzähne 17 und der Abstände 32 der Schneidenzähne 17 zueinander. Andererseits sind bei den Kassetten 16 die Spanwinkel 33 der einzelnen Schneidplatten 31 und die Anstellwinkel 35 der einzelnen Schneidplatten 31 unterschiedlich ausgeführt.

Figur 6 zeigt eine Seitenansicht einer Kassette 16 mit drei Schneidenzähnen 17, die in einer gleichmäßigen Teilung über den Außenradius der Kassette 16 verteilt sind. Dabei ist der Abstand 32 zwischen den Schneidenzähnen 17 identisch und entspricht dem doppelten Abstand eines der äußeren Schneidenzähne 17 zu der nächstgelegenen Kante der Kassette 16.

Figur 7 zeigt eine Seitenansicht einer Kassette 16 mit drei Schneidenzähnen 17, die in einer ungleichmäßigen Teilung über den Außenradius der Kassette 16 verteilt sind. Hierbei sind sowohl die Abstände 32 zwischen den Schneidenzähnen 17 unterschiedlich als auch die Abstände der äußeren Schneidenzähne 17 zu den nächstgelegenen Kanten der Kassette 16.

Figur 8 zeigt wieder eine Seitenansicht einer Kassette 16 mit einer gleichmäßigen Teilung. An dieser Kassette 16 sind jedoch nur zwei Schneidenzähne 17 angeordnet.

Figur 9 zeigt erneut eine Seitenansicht einer Kassette 16 mit einer ungleichmäßigen Teilung und zwei Schneidenzähnen 17.

Die Figuren 10 und 11 zeigen jeweils eine Schnittdarstellung einer Kassette 16 mit einer Schneidplatte 31. Die Schneidplatten 31 weisen unterschiedliche Spanwinkel 33 auf.

Figur 12 zeigt eine Draufsicht einer Kassette 16 mit einem Schneidenzahn 17 umfassend zwei Schneidplatten 31. Die Schneidplatten 31 weisen unterschiedliche Anstellwinkel 35 auf.

Figur 13 zeigt eine Seitenansicht einer Kassette 16, an der kein Schneidenzahn 17 und auch keine Schneidplatte 31 angeordnet ist.

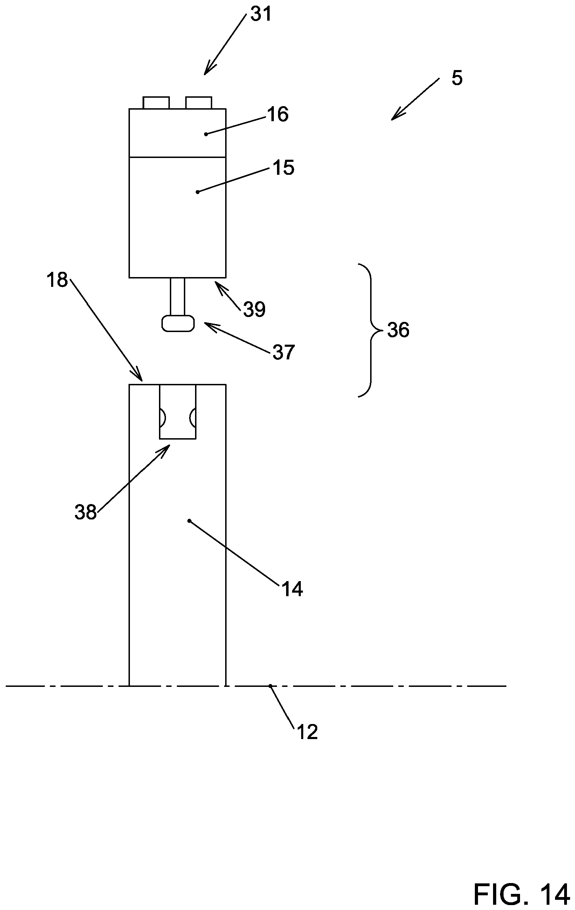

Die Figuren 14 bis 17 zeigen einen Ausschnitt des Fräsmesserkopfes 5 weiterer Ausführungsformen der Vorrichtung 1 in Schnittdarstellungen. Jede der Schneidplatten 31 ist individuell durch ein als Schraubverbindung ausgeführtes und nicht weiter dargestelltes Verbindungsmittel lösbar an einer der Kassetten 16 fixiert. Zur Montage und Demontage der einzelnen Schneidplatten 31 ist die Benutzung eines Werkzeuges, welches mit dem Verbindungsmittel zusammenwirkt, erforderlich. Mehrere an einem der Trägersegmente 15 lösbar fixierte Kassetten 16 sind mittels eines weiteren gemeinsamen oder individuellen, nicht dargestellten Verbindungsmittels und/oder mittels einer gemeinsamen oder individuellen, nicht dargestellten Halteeinrichtung mit dem Trägersegment 15 verbunden. Jedes der baugleichen Trägersegmente 15 ist unabhängig von den anderen Trägersegmenten 15 des jeweiligen Fräsmesserkopfes 5 lösbar an dem Werkzeugträger 14 fixiert. Zur Verbindung von Werkzeugträger 14 und Trägersegment 15 sind Verriegelungseinrichtungen 36 vorgesehen. Die Verriegelungseinrichtungen 36 bestehen aus zwei Teilen: einem aktiven Teil und einem passiven Teil. Der passive Teil ist vorzugsweise als ein rotationssymmetrischer Dorn 37 ausgeführt. Der aktive Teil ist vorzugsweise als eine den Dorn 37 aufnehmende Buchse 38 ausgeführt. Die Verriegelungseinrichtungen 36 dienen der lösbaren Fixierung und der Justierung der Trägersegmente 15 und dem Werkzeugträger 14 aneinander. Die Verriegelungseinrichtungen 36 sind mittels eines druckbeaufschlagten Fluids schaltbar ausgeführt und somit werkzeuglos zu betätigen. Der Werkzeugträger 14 hat zur Aufnahme jeweils eines der beispielsweise acht Trägersegmente 15 zumindest eine Anlagefläche 18. Jedes der Trägersegmente 15 hat wenigstens eine Befestigungsfläche 39, welche einer der Anlageflächen 18 zugeordnet ist. Die einander zugeordneten Anlageflächen 18 und Befestigungsflächen 39 sind jeweils eben und planparallel ausgeführt.

Figur 14 zeigt einen Ausschnitt des Fräsmesserkopfes 5 einer zweiten Ausführungsform der Vorrichtung 1 in einer Schnittdarstellung. Bei dieser Ausführungsform hat der Werkzeugträger 14 über seinen Umfang verteilt acht Anlageflächen 18, also eine für jedes der acht Trägersegmente 15. Die Anlageflächen 18 sind die radialen Außenseiten des Werkzeugträgers 14. Im Punkt des geringsten Abstandes zwischen einer Anlagefläche 18 und der Drehachse 12 ist jede der Anlageflächen 18 senkrecht zum Radius 34 des Fräsmesserkopfes 5 orientiert. Der Dorn 37 der Verriegelungseinrichtung 36 ist an dem Trägersegment 15 angeordnet und gegenüber der Befestigungsfläche 39 des Trägersegmentes 15 erhaben. Die Buchse 38 der Verriegelungseinrichtung 36 ist in dem Werkzeugträger 14 unterhalb der Anlagefläche 18 versenkt angeordnet. Die Mittellängsachse und/oder Symmetrieachse von Dorn 37 und Buchse 38 ist senkrecht zu der Anlagefläche 18 beziehungsweise senkrecht zu der Befestigungsfläche 39 orientiert. Der Dorn 37 hat eine Hinterschneidung, die mit einer schaltbaren Einschnürung der Buchse 38 zum Halten und Lösen zusammenwirkt. Zum Schalten der Verriegelungseinrichtung 36 ist die Einschnürung der Buchse 38 mit einem Fluidkreislauf der Vorrichtung 1 verbunden oder kann mit diesem verbunden werden.

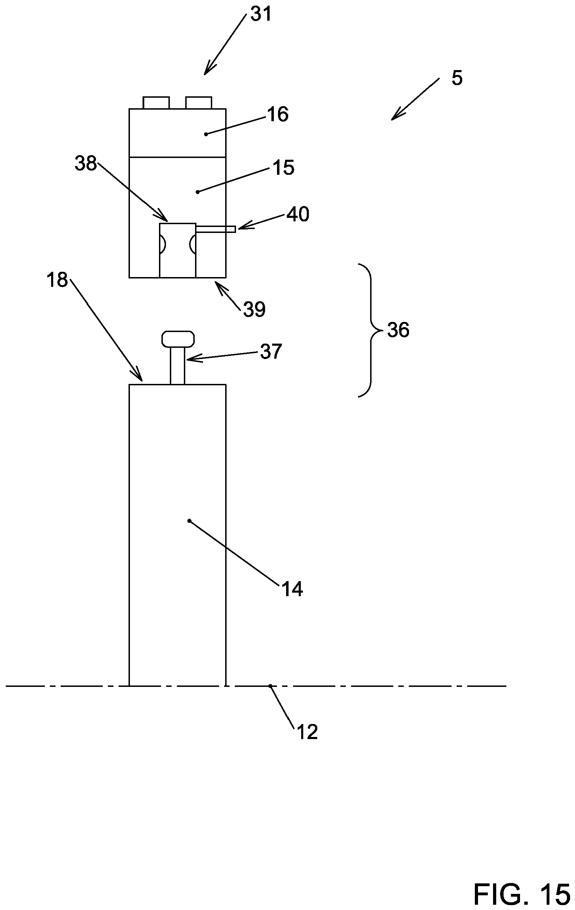

Figur 15 zeigt einen Ausschnitt des Fräsmesserkopfes 5 einer dritten Ausführungsform der Vorrichtung 1 in einer Schnittdarstellung. Diese Ausführungsform ist der in Figur 14 gezeigten sehr ähnlich. Abweichend ist die Anordnung der Buchse 38 in dem Trägersegment 15 unterhalb der Befestigungsfläche 39 und des Dornes 37 gegenüber der Anlagefläche 18 erhaben an dem Werkzeugträger 14. Zum Schalten der Verriegelungseinrichtung 36 muss die Buchse 38 mit einem Fluidkreislauf, beispielsweise dem der Vorrichtung 1, verbunden werden. Hierzu hat das Trägersegment 15 ein Anschlusselement 40.

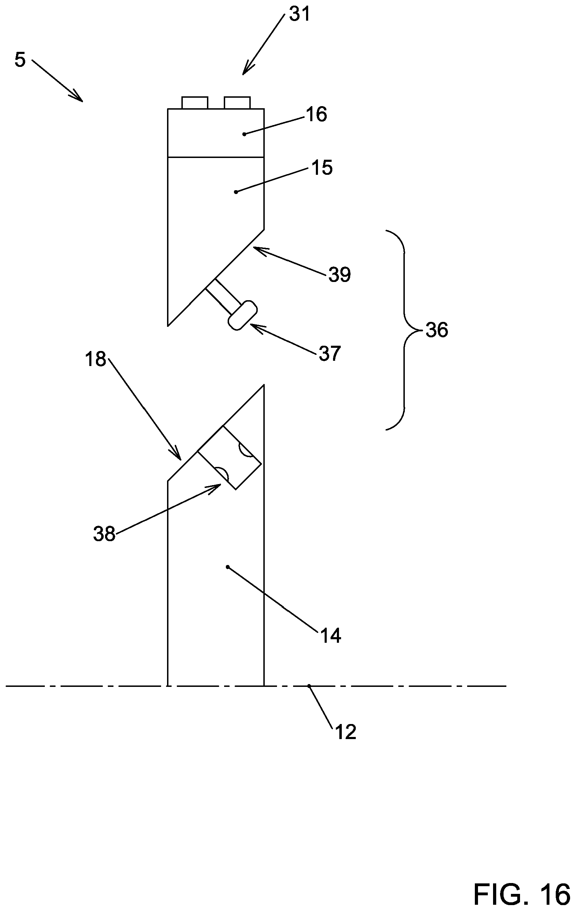

Figur 16 zeigt einen Ausschnitt des Fräsmesserkopfes 5 einer vierten Ausführungsform der Vorrichtung 1 in einer Schnittdarstellung. Diese Ausführungsform entspricht nahezu der in Figur 14 dargestellten zweiten Ausführungsform. Abweichend hiervon sind bei der vierten Ausführungsform die planparallel und eben ausgeführten Anlageflächen 18 und Befestigungsflächen 39 gegenüber einer zur Drehachse 12 des Fräsmesserkopfes 5 senkrechten Ebene geneigt. Hierdurch wird die Handhabung der Trägersegmente 15 bei deren Austausch erleichtert. Der Neigungswinkel beträgt vorzugsweise 30 bis 60 Grad.

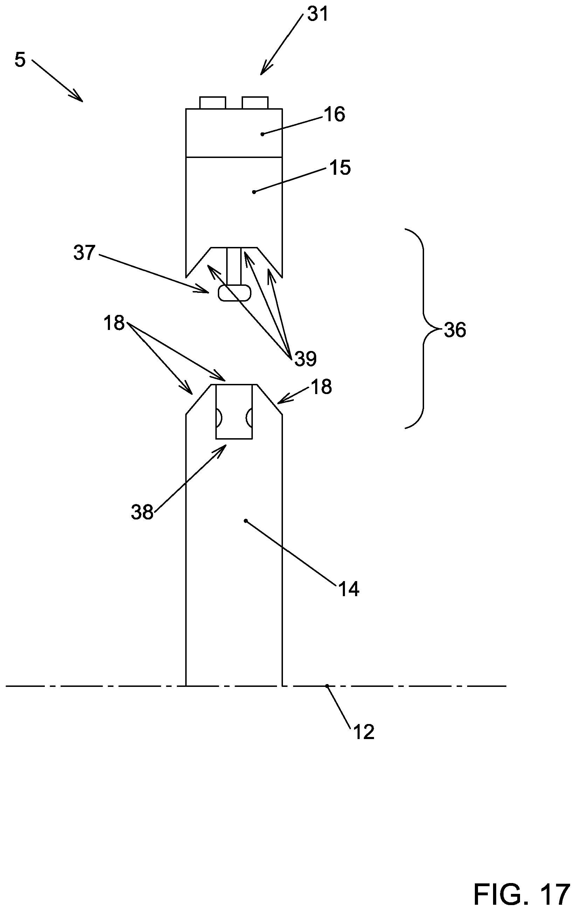

Figur 17 zeigt einen Ausschnitt des Fräsmesserkopfes 5 einer fünften Ausführungsform der Vorrichtung 1 in einer Schnittdarstellung. Diese Ausführungsform entspricht nahezu der in Figur 14 dargestellten zweiten Ausführungsform. Abweichend hiervon hat der Werkzeugträger 14 bei der fünften Ausführungsform für jedes Trägersegment 15 mehrere, insbesondere drei, Anlageflächen 18. Zumindest zwei einem Trägersegment 15 zugeordnete Anlageflächen 18 haben gegenüber einer zur Drehachse 12 des Fräsmesserkopfes 5 senkrechten Ebene unterschiedliche Neigungswinkel. Die Befestigungsflächen 39 sind zu den jeweiligen Anlageflächen 18 planparallel ausgeführt.

## Patentansprüche

1. Verfahrbare Vorrichtung (1) zum Fräsen von Schienenköpfen (2) der in einer Bettung (3) angeordneten Gleisschienen (4), mit einem rotierend angetriebenen Fräsmesserkopf (5), der in einem einen Fräsmesserkopfantrieb (7) tragenden Fahrwerk (6) gelagert ist, wobei der Fräsmesserkopf (5) wenigstens einen Schneidenzahn (17) aus mehreren Schneidplatten (31) zum Fräsen der Schienenköpfe (2) aufweist, **dadurch gekennzeichnet, dass** der Fräsmesserkopf (5) einen scheibenförmigen Werkzeugträger (14) aufweist, welcher mit dem Fräsmesserkopfantrieb (7) verbunden ist, wobei
• der Werkzeugträger (14) peripher angeordnete, mit Schneidplatten (31) bestückte Kassetten (16) aufweist, welche an mehreren lösbar mit dem Werkzeugträger (14) verbundenen Trägersegmenten (15) angeordnet sind,
und/oder
• an dem Werkzeugträger (14) peripher zumindest zwei mit Schneidplatten (31) bestückte und sich hinsichtlich der
o Anzahl der Schneidenzähne (17) und/oder
o Abstände (32) der Schneidenzähne (17) zueinander und/oder
o Spanwinkel (33) der einzelnen Schneidplatten (31) und/oder
o Anstellwinkel (35) der einzelnen Schneidplatten (31) unterscheidende Kassetten (16) angeordnet sind.

2. Verfahrbare Vorrichtung (1) zum Fräsen von Schienenköpfen (2) nach Anspruch 1, **dadurch gekennzeichnet, dass** die Vorrichtung (1) eine von dem Fahrwerk (6) getragene Arbeitskabine (20) aufweist, welche durch parallel zur Fahrtrichtung (21) orientierte Kabinenwände (22) begrenzt ist, und zwischen den Kabinenwänden (22) der Fräsmesserkopf (5), der Fräsmesserkopfantrieb (7) und die Verstellmittel (9) angeordnet sind.

3. Verfahrbare Vorrichtung (1) zum Fräsen von Schienenköpfen (2) nach den Ansprüchen 1 oder 2, **dadurch gekennzeichnet, dass** der Fräsmesserkopf (5) und der Fräsmesserkopfantrieb (7) gemeinsam an den Verstellmitteln (9) gelagert und in einer senkrecht zur Gleisschiene (4) orientierten Ebene verstellbar sind.

4. Verfahrbare Vorrichtung (1) zum Fräsen von Schienenköpfen (2) nach zumindest einem der vorhergehenden Ansprüche, **dadurch gekennzeichnet, dass** in der Arbeitskabine (20) eine Hubvorrichtung (23) angeordnet ist, die einen Segmentgreifer (24) umfasst, welcher in der Rotationsebene (13) des Fräsmesserkopfes (5) parallel und senkrecht zur Fahrtrichtung (21) translatorisch beweglich (25, 26) ist oder, insbesondere unabhängig von der Rotationsebene (13) des Fräsmesserkopfes (5), um eine senkrecht zur Fahrtrichtung (21) orientierte Achse rotatorisch beweglich (27) sowie parallel und senkrecht zur Fahrtrichtung (21) translatorisch beweglich (25, 26) ist.

5. Verfahrbare Vorrichtung (1) zum Fräsen von Schienenköpfen (2) nach zumindest einem der vorhergehenden Ansprüche, **dadurch gekennzeichnet, dass** in der Arbeitskabine (20), insbesondere in einem Rüstraum (41) der Arbeitskabine (20), ein Arbeitstisch (8) mit einem mehrere Aufnahmen (29) umfassenden Magazin (28) angeordnet ist, wobei vorzugsweise das Magazin (28) zwischen einer Wartungsposition und einer in der Rotationsebene (13) des Fräsmesserkopfes (5) liegenden Wechselposition verschieblich (30) gelagert ist.

6. Verfahrbare Vorrichtung (1) zum Fräsen von Schienenköpfen (2) nach zumindest einem der vorhergehenden Ansprüche, **dadurch gekennzeichnet, dass** in der Arbeitskabine (20), insbesondere in einem Fräsraum (42) der Arbeitskabine (20), mehrere Fräsmesserköpfe (5) und eine einzige zwischen den Rotationsebenen (13) der Fräsmesserköpfe (5) verstellbare Hubvorrichtung (23) angeordnet sind oder in der Arbeitskabine (20), insbesondere in einem Fräsraum (42) der Arbeitskabine (20), mehrere Fräsmesserköpfe (5) und für jeden der Fräsmesserköpfe (5) eine Hubvorrichtung (23) angeordnet sind.

7. Verfahrbare Vorrichtung (1) zum Fräsen von Schienenköpfen (2) nach zumindest einem der vorhergehenden Ansprüche, **dadurch gekennzeichnet, dass** der Werkzeugträger (14) eine polygonale Querschnittsform aufweist und mehrere, insbesondere mehr als sechs, vorzugsweise acht bis zwölf, Anlageflächen (18) zur Aufnahme einer entsprechenden Anzahl baugleicher Trägersegmente (15) umfasst.

8. Verfahrbare Vorrichtung (1) zum Fräsen von Schienenköpfen (2) nach zumindest einem der vorhergehenden Ansprüche, **dadurch gekennzeichnet, dass** die Trägersegmente (15) und die Kassetten (16) für eine universelle Befestigung jeder einzelnen der Kassetten (16) an jedem der Trägersegmente (15) und in jeder Position an einem Trägersegment (15) eingerichtet sind und/oder an jedem der Trägersegmente (15) die gleiche Anzahl Kassetten (16) lösbar befestigt ist, wobei an einem Trägersegment (15) vorzugsweise fünf bis acht Kassetten (16) angeordnet sind.

9. Verfahrbare Vorrichtung (1) zum Fräsen von Schienenköpfen (2) nach zumindest einem der vorhergehenden Ansprüche, **dadurch gekennzeichnet, dass** an wenigstens einem der Trägersegmente (15) zumindest zwei sich hinsichtlich der Anzahl der Schneidenzähne (17) und/oder der Abstände (32) der Schneidenzähne (17) zueinander und/oder der Spanwinkel (33) der einzelnen Schneidplatten (31) und/oder der Anstellwinkel (35) der einzelnen Schneidplatten (31) unterscheidende Kassetten (16) angeordnet sind.

10. Verfahrbare Vorrichtung (1) zum Fräsen von Schienenköpfen (2) nach zumindest einem der vorhergehenden Ansprüche, **dadurch gekennzeichnet, dass** der Fräsmesserkopf (5) und/oder der Fräsmesserkopfantrieb (7) mit Verstellmitteln (9) zur Positionierung des Fräsmesserkopfes (5) der Höhe (10) und/oder der Seite (11) nach zusammenwirkt.

11. Verfahren zum Wechsel von Schneidplatten (31) bei einer verfahrbaren Vorrichtung (1) zum Fräsen von Schienenköpfen (2) der in einer Bettung (3) angeordneten Gleisschienen (4), mit einem rotierend angetriebenen Fräsmesserkopf (5) umfassend wenigstens einen Schneidenzahn (17) aus mehreren Schneidplatten (31), **dadurch gekennzeichnet, dass** bei einem Erreichen eines festgelegten Abnutzungskriteriums der Schneidplatten (31) an dem Fräsmesserkopf (5) mehrere Schneidplatten (31) als eine Gruppe gleichzeitig ausgetauscht werden, insbesondere indem von einem scheibenförmigen Werkzeugträger (14) des Fräsmesserkopfes (5) eines mehrerer Trägersegmente (15), welches verschiedene mit mehreren der peripher angeordneten Schneidplatten (31) bestückten Kassetten (16) aufweist, gelöst wird, dann von dem Fräsmesserkopf (5) entfernt wird und schließlich ein bereitgehaltenes anderes Trägersegment (15) an dem Werkzeugträger (14) angeordnet und mit diesem verbunden wird.

12. Verfahren zum Wechsel von Schneidplatten (31) nach Anspruch 11, **dadurch gekennzeichnet, dass** die Trägersegmente (15) durch eine automatische und/oder manuelle Betätigung einer Verriegelungseinrichtung (36) vorzugsweise einzeln an dem Werkzeugträger (14) fixiert beziehungsweise von dem Werkzeugträger (14) gelöst werden.

13. Verfahren zum Wechsel von Schneidplatten (31) nach den Ansprüchen 11 oder 12, **dadurch gekennzeichnet, dass** der Austausch eines, mehrerer oder aller Trägersegmente (15) eines Fräsmesserkopfes (5) in einer Arbeitskabine (20) der Vorrichtung (1) durchgeführt wird und/oder der Austausch der Kassetten (16) entfernt von dem Fräsmesserkopf (5) vorzugsweise an einem in einer Vorrichtung (1) angeordneten Arbeitstisch (8) durchgeführt wird.

14. Verfahren zum Wechsel von Schneidplatten (31) nach zumindest einem der vorhergehenden Ansprüche 11 bis 13, **dadurch gekennzeichnet, dass** innerhalb der Vorrichtung (1), insbesondere in einem Rüstraum (41) der Arbeitskabine (20), an einem von dem Fräsmesserkopf (5) abgenommenen Trägersegment (15) eine, mehrere oder alle Kassetten (16) gewechselt werden und/oder der Austausch der Schneidplatten (31) an den Kassetten (16) durchgeführt wird.

15. Verfahren zum Wechsel von Schneidplatten (31) nach zumindest einem der vorhergehenden Ansprüche 11 bis 14, **dadurch gekennzeichnet, dass** die Trägersegmente (15) nach dem Lösen von dem Werkzeugträger (14) in einer radial und/oder axial zu der Drehachse (12) orientierten Richtung von dem Werkzeugträger (14), insbesondere mittels einer Hubvorrichtung (23), abgenommen werden.

## Claims

1. Movable device (1) for milling rail heads (2) of the track rails (4) which are arranged in a track bed (3), with a rotatingly driven milling cutter head (5) which is mounted in a chassis (6) carrying a milling cutter head drive (7), wherein the milling cutter head (5) has at least one cutting tooth (17) consisting of a plurality of cutting inserts (31) for milling the rail heads (2), **characterized in that** the milling cutter head (5) has a disc-shaped tool carrier (14) which is connected to the milling cutter head drive (7), wherein
• the tool carrier (14) has peripherally arranged cassettes (16) which are equipped with cutting inserts (31) and are arranged on a plurality of carrier segments (15) connected releasably to the tool carrier (14), and/or
• at least two cassettes (16) are arranged peripherally on the tool carrier (14), said cassettes being equipped with cutting inserts (31) and differing in respect of the
∘ number of cutting teeth (17) and/or
∘ distances (32) of the cutting teeth (17) from one another and/or
∘ rake angles (33) of the individual cutting inserts (31) and/or
∘ work angles (35) of the individual cutting inserts (31).

2. Movable device (1) for milling rail heads (2) according to Claim 1, **characterized in that** the device (1) has a work cab (20) which is carried by the chassis (6) and is bounded by cab walls (22) oriented parallel to the direction of travel (21), and the milling cutter head (5), the milling cutter head drive (7) and the adjustment means (9) are arranged between the cab walls (22).

3. Movable device (1) for milling rail heads (2) according to Claim 1 or 2, **characterized in that** the milling cutter head (5) and the milling cutter head drive (7) are mounted together on the adjustment means (9) and are adjustable in a plane oriented perpendicularly to the track rail (4).

4. Movable device (1) for milling rail heads (2) according to at least one of the preceding claims, **characterized in that** a lifting device (23) is arranged in the work cab (20), said lifting device comprising a segment gripper (24) which, in the plane of rotation (13) of the milling cutter head (5), is movable in a translatory manner (25, 26) parallel and perpendicular to the direction of travel (21), or, in particular independently of the plane of rotation (13) of the milling cutter head (5), is movable in a rotational manner (27) about an axis oriented perpendicular to the direction of travel (21) and is also movable in a translatory manner (25, 26) parallel and perpendicular to the direction of travel (21).

5. Movable device (1) for milling rail heads (2) according to at least one of the preceding claims, **characterized in that** a work table (8) with a magazine (28) comprising a plurality of receptacles (29) is arranged in the work cab (20), in particular in a set-up space (14) of the work cab (20), wherein the magazine (28) is preferably mounted so as to be displaceable (30) between a maintenance position and a change position located in the plane of rotation (13) of the milling cutter head (5).

6. Movable device (1) for milling rail heads (2) according to at least one of the preceding claims, **characterized in that** a plurality of milling cutter heads (5) and a single lifting device (23) which is adjustable between the planes of rotation (13) of the milling cutter heads (5) are arranged in the work cab (20), in particular in a milling space (42) of the work cab (20), or a plurality of milling cutter heads (5) and a lifting device (23) for each of the milling cutter heads (5) are arranged in the work cab (20), in particular in a milling space (42) of the work cab (20).

7. Movable device (1) for milling rail heads (2) according to at least one of the preceding claims, **characterized in that** the tool carrier (14) has a polygonal cross-sectional form and comprises a plurality of contact surfaces (18), in particular more than six, preferably eight to twelve contact surfaces, for receiving a corresponding number of constructionally identical carrier segments (15).

8. Movable device (1) for milling rail heads (2) according to at least one of the preceding claims, **characterized in that** the carrier segments (15) and the cassettes (16) are designed for universal fastening of each individual one of the cassettes (16) to each of the carrier segments (15) and in every position on a carrier segment (15), and/or the same number of cassettes (16) is fastened releasably to each of the carrier segments (15), wherein preferably five to eight cassettes (16) are arranged on a carrier segment (15).

9. Movable device (1) for milling rail heads (2) according to at least one of the preceding claims, **characterized in that** at least two cassettes (16) which differ in respect of the number of cutting teeth (17) and/or the distances (32) of the cutting teeth (17) from one another and/or the rake angles (33) of the individual cutting inserts (31) and/or the work angles (35) of the individual cutting inserts (31) are arranged on at least one of the carrier segments (15).

10. Movable device (1) for milling rail heads (2) according to at least one of the preceding claims, **characterized in that** the milling cutter head (5) and/or the milling cutter head drive (7) interact/interacts with adjustment means (9) for positioning the milling cutter head (5) in terms of the height (10) and/or the side (11).

11. Method for changing cutting inserts (31) in a movable device (1) for milling rail heads (2) of the track rails (4) arranged in a track bed (3), with a rotatingly driven milling cutter head (5) comprising at least one cutting tooth (17) consisting of a plurality of cutting inserts (31), **characterized in that,** when a determined wear criterion of the cutting inserts (31) on the milling cutter head (5) is reached, a plurality of cutting inserts (31) are interchanged simultaneously as a group, in particular by one of the plurality of carrier segments (15), which has different cassettes (16) equipped with a plurality of the peripherally arranged cutting inserts (31), being released from a disc-shaped tool carrier (14) of the milling cutter head (5), then being removed from the milling cutter head (5), and, finally, another carrier segment (15) which is held ready is arranged on the tool carrier (14) and is connected thereto.

12. Method for changing cutting inserts (31) according to Claim 11, **characterized in that** the carrier segments (15) are fixed, preferably individually, to the tool carrier (14) or released from the tool carrier (14) by an automatic and/or manual actuation of a locking device (36).

13. Method for changing cutting inserts (31) according to Claim 11 or 12, **characterized in that** the interchanging of one, more than one or all of the carrier segments (15) of a milling cutter head (5) is carried out in a work cab (20) of the device (1), and/or the interchanging of the cassettes (16) is carried out away from the milling cutter head (5), preferably on a work table (8) arranged in a device (1).

14. Method for changing cutting inserts (31) according to at least one of the preceding Claims 11 to 13, **characterized in that,** within the device (1), in particular in a set-up space (41) of the work cab (20), one, more than one or all of the cassettes (16) on a carrier segment (15) removed from the milling cutter head (5) are changed, and/or the interchanging of the cutting inserts (31) on the cassettes (16) is carried out.

15. Method for changing cutting inserts (31) according to at least one of the preceding Claims 11 to 14, **characterized in that** the carrier segments (15), after release from the tool carrier (14), are removed from the tool carrier (14) in a direction oriented radially and/or axially with respect to the axis of rotation (12), in particular by means of a lifting device (23).

## Revendications

1. Dispositif mobile (1) pour le fraisage de champignons de rails (2) de rails (4) disposés dans un lit (3), comprenant une tête de fraisage (5) entraînée en rotation, qui est supportée dans un châssis (6) portant un entraînement de la tête de fraisage (7), la tête de fraisage (5) présentant au moins une dent de coupe (17) constituée de plusieurs plaquettes de coupe (31) pour le fraisage des champignons de rail (2), **caractérisé en ce que** la tête de fraisage (5) présente un porte-outil en forme de disque (14) qui est connecté à l'entraînement de la tête de fraisage (7),
- le porte-outil (14) présentant des cassettes (16) disposées sur la périphérie, pourvues de plaquettes de coupe (31) qui sont disposées au niveau de plusieurs segments de support (15) connectés de manière détachable au porte-outil (14), et/ou
- au moins deux cassettes (16) étant disposées sur le porte-outil (14) sur la périphérie, lesquelles sont pourvues de plaquettes de coupe (31) et se distinguent en termes
- de nombre des dents de coupe (17) et/ou
- d'espacement (32) des dents de coupe (17) les unes par rapport aux autres et/ou
- d'angle d'inclinaison de coupe (33) des plaquettes de coupe individuelles (31) et/ou
- d'angle d'attaque (35) des plaquettes de coupe individuelles (31).

2. Dispositif mobile (1) pour le fraisage de champignons de rails (2) selon la revendication 1, **caractérisé en ce que** le dispositif (1) présente une cabine de travail (20) portée par un châssis (6), qui est limitée par des parois de cabine (22) orientées parallèlement à la direction de conduite (21), et la tête de fraisage (5), l'entraînement de la tête de fraisage (7) et les moyens de réglage (9) sont disposés entre les parois de cabine (22).

3. Dispositif mobile (1) pour le fraisage de champignons de rails (2) selon les revendications 1 ou 2, **caractérisé en ce que** la tête de fraisage (5) et l'entraînement de la tête de fraisage (7) sont supportés en commun sur les moyens de réglage (9) et peuvent être déplacés dans un plan orienté perpendiculairement au rail (4).

4. Dispositif mobile (1) pour le fraisage de champignons de rail (2) selon au moins l'une quelconque des revendications précédentes, **caractérisé en ce que** dans la cabine de travail (20) est disposé un dispositif de levage (23) qui comprend un élément de préhension de segments (24) qui peut être déplacé en translation (25, 26) dans le plan de rotation (13) de la tête de fraisage (5) parallèlement et perpendiculairement à la direction de conduite (21), ou qui notamment indépendamment du plan de rotation (13) de la tête de fraisage (5), peut être déplacé en rotation (27) autour d'un axe orienté perpendiculairement à la direction de conduite (21) et peut être déplacé en translation (25, 26) parallèlement et perpendiculairement à la direction de conduite (21).

5. Dispositif mobile (1) pour le fraisage de champignons de rails (2) selon au moins l'une des revendications précédentes, **caractérisé en ce que** dans la cabine de travail (20), en particulier dans un espace d'équipement (41) de la cabine de travail (20), est disposée une table de travail (8) avec un magasin (28) comprenant plusieurs logements (29), le magasin (28) étant de préférence supporté de manière déplaçable (30) entre une position de maintenance et une position de changement située dans le plan de rotation (13) de la tête de fraisage (5).

6. Dispositif mobile (1) pour le fraisage de champignons de rails (2) selon au moins l'une des revendications précédentes, **caractérisé en ce que** dans la cabine de travail (20), en particulier dans un espace de fraisage (42) de la cabine de travail (20), sont disposées plusieurs têtes de fraisage (5) et un dispositif de levage unique (23) pouvant être déplacé entre les plans de rotation (13) des têtes de fraisage (5) ou dans la cabine de travail (20), en particulier dans un espace de fraisage (42) de la cabine de travail (20), sont disposées plusieurs têtes de fraisage (5) et un dispositif de levage (23) pour chacune des têtes de fraisage (5).

7. Dispositif mobile (1) pour le fraisage de champignons de rails (2) selon au moins l'une des revendications précédentes, **caractérisé en ce que** le porte-outil (14) présente une forme polygonale en section transversale et comprend plusieurs faces d'appui (18) en particulier plus de six, de préférence de huit à douze, pour recevoir un nombre correspondant de segments de support de même construction (15).

8. Dispositif mobile (1) pour le fraisage de champignons de rails (2) selon au moins l'une quelconque des revendications précédentes, **caractérisé en ce que** les segments de support (15) et les cassettes (16) sont prévus pour une fixation universelle de chacune individuelle des cassettes (16) sur chacun des segments de support (15) et dans chaque position au niveau d'un segment de support (15), et/ou au niveau de chacun des segments de support (15), le même nombre de cassettes (16) sont fixées de manière détachable, de préférence cinq à huit cassettes (16) étant disposées au niveau d'un segment de support (15).

9. Dispositif mobile (1) pour le fraisage de champignons de rails (2) selon au moins l'une des revendications précédentes, **caractérisé en ce qu**'au niveau d'au moins l'un des segments de support (15) sont disposés au moins deux cassettes (16) se distinguant en termes du nombre des dents de coupe (17) et/ou des espacements (32) des dents de coupe (17) les unes par rapport aux autres et/ou des angles d'inclinaison de coupe (33) des plaquettes de coupe individuelle (31) et/ou des angles d'attaque (35) des plaquettes de coupe individuelles (31).

10. Dispositif mobile (1) pour le fraisage de champignons de rails (2) selon au moins l'une des revendications précédentes, **caractérisé en ce que** la tête de fraisage (5) et/ou l'entraînement de la tête de fraisage (7) coopère (nt) avec des moyens de réglage (9) pour le positionnement de la tête de fraisage (5) en hauteur (10) et/ou latéralement (11).

11. Procédé pour le remplacement de plaquettes de coupe (31) dans un dispositif mobile (1) pour le fraisage de champignons de rails (2) de rails (4) disposées dans un lit (3), comprenant une tête de fraisage (5) entraînée en rotation comprenant au moins une dent de coupe (17) de plusieurs plaquettes de coupe (31), **caractérisé en ce qu**'à l'obtention d'un critère d'usure établi des plaquettes de coupe (31) au niveau de la tête de fraisage (5), plusieurs plaquettes de coupe (31) sont remplacées simultanément en groupes, en particulier en ce que l'un parmi plusieurs segments de support (15), qui présente plusieurs cassettes (16) pourvues de plusieurs des plaquettes de coupe disposées sur la périphérie (31), est détaché d'un porte-outil (14) en forme de disque de la tête de fraisage (5), puis est enlevé de la tête de fraisage (5) et finalement un autre segment de support (15) maintenu prêt est disposé sur le porte-outil (14) et est assemblé à celui-ci.

12. Procédé pour le remplacement de plaquettes de coupe (31) selon la revendication 11, **caractérisé en ce que** les segments de support (15) sont fixés au porte-outil (14), ou sont détachés du porte-outil (14), par un actionnement automatique et/ou manuel d'un dispositif de verrouillage (36), de préférence individuellement.

13. Procédé pour le remplacement de plaquettes de coupe (31) selon les revendications 11 ou 12, **caractérisé en ce que** le remplacement d'un, de plusieurs ou de la totalité des segments de support (15) d'une tête de fraisage (5) est effectué dans une cabine de travail (20) du dispositif (1) et/ou le remplacement des cassettes (16) est effectué à distance de la tête de fraisage (5), de préférence au niveau d'une table de travail (8) disposée dans un dispositif (1).

14. Procédé pour le remplacement de plaquettes de coupe (31) selon au moins l'une des revendications précédentes 11 à 13, **caractérisé en ce qu**'à l'intérieur du dispositif (1), en particulier dans un espace d'équipement (41) de la cabine de travail (20), au niveau d'un segment de support (15) enlevé de la tête de fraisage (5), une, plusieurs ou la totalité des cassettes (16) sont remplacées et/ou le remplacement des plaquettes de coupe (31) est effectué au niveau des cassettes (16).

15. Procédé pour le remplacement de plaquettes de coupe (31) selon au moins l'une des revendications précédentes 11 à 14, **caractérisé en ce que** les segments de support (15), après avoir été détachés du porte-outil (14), sont enlevés du porte-outil (14) dans une direction orientée radialement et/ou axialement par rapport à l'axe de rotation (12), en particulier au moyen d'un dispositif de levage (23).
